# EUROPEAN PATENT APPLICATION

(11) **EP 4 420 520 A1**
(43) Date of publication of application: **28.08.2024**
(21) Application number: 23305256.2
(22) Date of filing: 24.02.2023
(51) Int. Cl.: A21D 2/26, A21D 8/04, A21D 2/18, A21D 2/20, A21D 8/02, A21D 10/00, A21D 13/02, A21D 13/06, A23L 33/125, A23L 33/195

(54) **PANIFICATION WITH B-GLUCANS, AND LACCASE OR PEROXIDASE**

(71) Applicant: Green Spot Technologies, 31520 Ramonville-Saint-Agne (FR)
(72) Inventor: DELPECH, Pierre, 82300 Caussade (FR); VILLAS-BOAS, Silas, L-1145 Luxembourg (LU); GRANUCCI, Nina, 31400 Toulouse (FR)
(74) Representative: Santarelli

(57) **Abstract**

The present invention relates to a method for processing a raised dough, comprising the steps of forming a dough by mixing at least a raising agent, flour, water and a dough improver, said dough improver comprising fungal β-glucans, and laccase and/or peroxidase; and raising the dough; wherein the fungal β-glucans comprised in the dough improver are introduced at a content of 2 wt% or less by weight of the flour. The present invention also relates to methods for preparing a cooked raised dough.

## Description

The present invention relates to the field of additives for bakery and pastry products.

To improve bread and breadmaking attributes, baking industry generally use several additives like enzymes or chemicals. Moreover, these additives are also useful other bakery and pastry products. However, these additives face some problems: the stability of enzymes in a purified form, law authorizations and the increasing reject of bakers and costumers of non-natural products, particularly when these enzymes and chemicals are produced from GMOs.

Bread and pastry additives are further expected to provide the best possible volume in the dough and finished product, as volume affects the fluffiness, the lightness in weight, the texture and thus, the overall mouth feel of the product.

To promote the good health of consumers, it is also essential that the additives added to the dough contribute to an improved nutritional value of the finished product.

Thus, there is still a need for natural and eco-responsible additives for improving dough volume during fermentation of bakery and pastry products.

The inventors have surprisingly found that a particular additive allows to avoid the above-mentioned drawbacks.

In a particular embodiment, the additive is a natural additive prepared from fermented fruit or vegetable by-products. This natural additive is of particular ecological interest because it results from the valorisation of vegetable waste and thus allows the sustainability of its manufacturing process.

Also, the additive has a high fiber content that promotes maintaining good gut health. Thus, the additive contributes to a wholesome nutrition with simple ingredients sourced from nature.

The present invention relates to a method for processing a raised dough, comprising the following steps:
a. forming a dough by mixing at least a raising agent, flour, water and a dough improver, said dough improver comprising fungal β-glucans, and laccase and/or peroxidase;
b. raising the dough;
   wherein the fungal β-glucans comprised in the dough improver are introduced at a content of 2 wt% or less by weight of the flour.

By "dough", it is intended to mean a composition comprising flour and a liquid such as water or milk, which are knead to obtain a preparation of soft and rather sticky consistency. Various ingredients (fats, eggs, salt, sugar, flavourings, etc.) can also be incorporated by kneading in the composition.

By "raised dough", it is intended to mean a mixture of flour, water and a raising agent left to rise for an appropriate amount of time. The dough can also comprise further ingredients such as fat, salt, eggs, flavours and sugar. Raised doughs are used to make pizzas, bread, buns, for example burger buns, muffins, cakes, pastries etc.

By "raising agent", it is intended to mean an ingredient that is used in doughs and pastes in order to cause a foaming action that lightens, softens and/or increase the volume of the dough or paste.

The raising agent can be a synthetic chemical compound, such as for example baking powder or baking soda. Preferably, when the raising agent is baking soda, the amount of baking soda in the dough is comprised between 0,001% by weight (wt%) and 3 wt%, more preferably between 0,1 wt% and 2 wt%, even more preferably between 0,5 wt% and 1,5 wt% with respect to the total weight of the dough.

It will be noted that in the context of the present application, and unless otherwise stipulated, the ranges of values indicated are understood to be inclusive.
The raising agent can also be a biological agent, such as a microbiological consortium in a sourdough (bacteria, and/or yeasts), or such as a yeast, for example strains from the genus *Saccharomyces,* for example from the species *Saccharomyces cerevisiae.*

Preferably, the raising agent is a yeast or sourdough.

Preferably, when the raising agent is a yeast, the amount of yeast in the dough is comprised between 0.001 wt% and 5 wt%, more preferably between 0.1 wt% and 3.5 wt%, even more preferably between 0.5 wt% and 3.0 wt% with respect to the total weight of the dough.

The raising agent can be used dry or fresh when added to the other ingredients in the dough. In some cases, the raising agent can be dissolved in water before it is added to the other ingredients of the dough.

By "flour", it is intended to mean, unless otherwise specified, a non-fermented cereal flour or a mixture thereof, for example, a white, brown or whole cereal powder that is made by grinding cereal grain. Advantageously, flour can be selected from wheat flour, buckwheat flour, ancient wheat flour, five grain flour, rye flour, spelt flour, einkorn flour, barley flour, corn flour, oats flour, etc. Preferably, flour used to prepare raised dough contains gluten. Advantageously, when a flour does not contain gluten, the dough is enriched with an additive, such as xanthan gum, guar gum or psyllium.

Preferably, the amount of flour in the dough is at least 10 wt%, more preferably at least 20 wt%, even more preferably 30 wt% with respect to the total weight of the dough.

Preferably, the amount of flour in the dough is comprised between 15 wt% and 70 wt%, more preferably, between 20 wt% and 65 wt%, such as between 35 wt% and 60 wt%, with respect to the total weight of the dough.

By "water", it is intended to mean any water suitable for food such as tap water, distilled water, mineral water or any water comprises in a liquid food ingredient, such as milk or plant-based milk.

Preferably, the amount of water used to form the dough is comprised between 5 wt% and 65 wt%, more preferably, between 10 wt% and 65 wt%, such as between 35 wt% and 45 wt%, with respect to the total weight of the dough.

By "dough improver", it is intended to mean a food additive that consists of an ingredient or a mixture of ingredients, added to flour or to a dough to improve it in some way such as to strengthen its texture and/or raise its volume. Synonyms for a dough improver are "dough conditioner", "flour treatment agent" or "improving agent". Preferably, the dough improver raises the volume of the dough.

By "food additive", it is meant a substance added to the food in small proportions (1 to 10 wt% with respect to the total weight of the food, i.e. in the present case, the dough) compared to the other ingredients.

By "β-glucans", it is intended to mean a group of β-D-glucose polysaccharides, arranged in six-sided D-glucose rings connected linearly by β-(1,3), β-(1,4) and/or β-(1,6) bonds, and including a 1-3 glycosidic link in their backbone. β-glucans are preferably quantified using the β-Glucan Assay Kit (Mixed Linkage) from Megazyme and following supplier's instructions. The β-glucans implemented in the process according to the invention are fungal β-glucans. Such fungal β-glucans are linear (1,3)-β-D-glucose polysaccharides with (1,6)-linked-β-glucosyl or β-(1,6)-oligoglucosyl side chains. Fungal β-glucans are preferably quantified using aniline blue method, preferably by following the protocol described in Example 1.2 below.

In an embodiment, the amount of fungal β-glucans is comprised between 0.001 wt% and 2 wt% with respect to weight of flour(s) in the dough. Preferably, the amount of fungal β-glucans is comprised between 0.005 wt% and 1.5 wt%, more preferably between 0.01 wt% and 1 wt% with respect to weight of flour in the dough.

By "laccase", it is intended to mean a multicopper oxidase, which property is to oxidize a variety of phenolic substrates, performing one-electron oxidations, leading to crosslinking. Laccase is designated under the EC number 1.10.3.2. Its activity is preferably measured by monitoring the 2,2'-azinobis(3-ethylbenzthiazoline-6-sulfonate) oxidation at 420 nm, as described in Example 1.3 below.

By "peroxidase", it is intended to mean any of a group of enzymes that catalyze the oxidation of a compound by the decomposition of hydrogen peroxide or an organic peroxide. Its activity is preferably measured as described in Example 1.3 below.

Laccase and/or peroxidase, and fungal β-glucans can be provided separately or as a combined preparation to form the dough improver in the method of processing raised dough according to the invention.

It should be noted that, when laccase and peroxidase are deactivated, such as after cooking, their activity cannot be detected.

Preferably, laccase is provided with an activity between 0.001 and 5 U/g of flour, more preferably between 0.005 and 3.0 U/g of flour, still more preferably between 0.01 to 1.2 U/g of flour such as between 0.01 to 0.5 U/g of flour.

Preferably, peroxidase is provided with an activity between 0.000001 and 0.1 U/g of flour, more preferably between 0.0001 and 0.08 U/g of flour, still more preferably between 0.0005 and 0.06 U/g of flour such as between 0.0005 and 0.02 U/g of flour.

In an embodiment, the dough improver is a fungal fermented flour, which combines fungal β-glucans, and laccase and/or peroxidase.

Preferably, the dough improver comprises laccase at a content comprised between 0,001 to 5 U/g of flour, and peroxidase at a content comprised between 0,000001 to 0,10 U/g of flour.

In a particularly advantageous embodiment, the dough improver is a fungal fermented flour.

By "fermented flour", it is intended to mean a fermented flour obtained by solidstate fermentation of a plant material with edible fungi, and that has been gently dried, such as freeze-dried, or such as conventional drying at 35°C, in order to preserve the quality of the enzymes. In particular, the fermented flour can be obtained by the following process:
a) providing a plant material having a moisture level between 45% and 95%, optionally mixed with a food grade nitrogen source such as ammonium sulphate, glutamic acid, yeast extract, peptone and/or di-ammonium phosphate,
b) sterilising the plant material of a), such as preferably, at about 100 kPa and about 121°C for about 20 min,
c) inoculating the sterile plant material with an edible fungus at an amount of 0.1 to 10% by weight of a liquid or solid inoculum compared to the plant material,
d) incubating the inoculated plant material for a period of time to produce a fermented plant material, preferably at 18°C-40°C for a period of 5-50 days, more preferably, at 25°C-30°C for 14 to 35 days,
e) drying the fermented plant material of d), preferably at 30°C-70°C; and
f) milling the dried, fermented plant material to form a fermented flour.

By "about [a value ofJ X", it is intended to mean more or less 10% of the value of X.

Preferably, the liquid or solid inoculum is introduced in the plant material at a concentration of 10² to 10⁸ spores or cells per gram of sterile plant material.

By "plant material", it is meant advantageously fruits (e.g. kiwifruit, apple, pear, citrus (such as orange, lime and lemon), mango, berries, feijoa, banana, peach, nectarine, pineapple, melon, watermelon, grape), vegetables (e.g. tomato, avocado), tubers (e.g. carrot, cassava, onion, parsnip, beetroot, potato, arrowroot, taro), nuts (e.g. acorn, hazelnut, chestnut, coconut, almond), seeds (e.g. bean, pea, chickpea, chia, soybean, quinoa) and/or cereals (e.g. sorghum, wheat, oats, barley, buckwheat, corn, rice, spelt, rye, hemp) or by-products and/or derivatives thereof such as pomaces, skins/peels, seeds or roots. Preferably, the plant material used in the preparation of the fermented flour is a by-product such as pomaces, skins, peels from a fruit, a vegetable or from a cereal.

Advantageously, edible fungi are selected from the group consisting of *Pleurotus* (such as *P*. *ostreatus, P. eryngi, P. pulmonarius, P. djamor, P. australis, P. purpureoolivaceus, P. citrinopileatus, P. sajor-caju, P. florida, P. flabellatus, P. ferulae, P. cystidiosus*), *Lentinula* (such as *L. edodes, L. boryana, L. novae-zelandiae, L. tigrinus*), *Ganoderma* (such as *G*. *lucidum, G. applanatum, G. tsugae*), *Volvariella* (such as *V. volvacea, V. esculenta, V. bakeri, V. dysplasia*), *Auricularia* (such as *A. auricola, A. cornea, A. subglabra*), *Armillaria* (such as *A. mellea, A. ostoyae, A. gemina, A. calvescens, A. Sinapin, A. gallica*), *Flammulina* (such as *F. velutipes, F.* fennae), *Pholiota* (such as *P*. *squarrosa, P. nemako*), *Tremella* (such as *T. mesenterica, T. fuciformis*), *Hericium* (such as *H. erinaceus, H. coralloides*), *Agaricus* (such as *A. campestris, A. bisporus, A. bitorquis*), *Laetiporus* (such as *L. sulphurous*), *Sparassis* (such as *S*. *crispa*, *S. spathulata*), *Morchella* (such as *M. esculenta, M. hortensis, M. conica, M. vulgaris, M. rotunda, M. costada*), *Hypsizygus* (such as *H. tessulatus, H. ulmarius*), *Grifola* (such as G. *frondosa, G. umbellata*), *Boletus* (such as *B*. *edulis, B. aereus, B. estivalis, B. pinicola*), *Stropharia* (such as *S*. *rugosoannulata*), *Cantharellus* (such as *C*. *cibarius, C. edulis*), *Russula* (such as *R. cyanoxantha, R. virescens, R. vesca*), *Cyclocybe* (such as *C*. *aegerita*), *Rhizopus* (such as *R. oligosporus, R. oryzae, R. stolonifer*), *Aspergillus* (such as *A. acidus, A. niger, A. oryzae, A. sojae*), *Monascus* (such as *M. albidus, M. anka, M. araneosus, M. major, M. purpureus, M. rubiginosus, M. vini*), *Penicillium* (such as *P*. *camemberti, P. glaucum, P. nalgiovense, P. roqueforti*), *Fusarium* (such as *F*. *venenatum*) and *Norospora* (such as *N. intermedia*).

Preferably, the edible fungus is selected from Aspergillus and Pleurotus.

These fermented flours contain fungal β-glucans.

Preferably, the fermented flour contains fungal β-glucans in an amount comprised between 0.5 and 100 mg/g of flour. More preferably, the fermented flour contains fungal β-glucans in an amount comprised between 1 and 70 mg/g of flour. Even more preferably, the fermented flour contains fungal β-glucans in an amount comprised between 4 and 50 mg/g of flour.

These fermented flours should also contain laccase and/or peroxidase but their compositions are not limited to these two enzymes. These flours can also contain other enzymes (e.g. amylase, pectinase, laccase, protease, lipase, glucose oxidase, phytase, xylanase, poly-galacturonase, lichenase, other beta-glucanases and other peroxidases). These fermented flours may also contain other molecule of interest for breadmaking.

In an embodiment, the dough improver is a fungal fermented flour, which comprises fungal β-glucans, and laccase and/or peroxidase, most preferably, fungal β-glucans, laccase and peroxidase.

Preferably, when the dough improver is a fermented flour, the fermented flour comprises 0.01-30U/g of laccase, preferably 0.9-6U/g of laccase, most preferably, 1-3,5 U/g of laccase.

Preferably, when the dough improver is a fermented flour, the fermented flour comprises 0-2.5U/g of peroxidase, preferably 0.0001-1 U/g of peroxidase, most preferably, 0.02-0.1 U/g of peroxidase.

The proportions of enzymes in flours obtained from fermentation of fruit, vegetable and cereal by-products is different depending on the type of by-product (see Table 3). As evidenced by Example, the improvement of dough volume and breads specific volume by fermented flour obtained from the fermentation of fruit, cereal and vegetable by-products is caused by β-glucans, and laccase and/or peroxidase activities. This is confirmed by the examples 3 to 6, also evidencing that the effect is obtained by various fermented flours comprising β-glucans, and laccase and/or peroxidase.

Advantageously, the fermented flour comprises 0.5 % to 60 wt% proteins, preferably, 5% to 35 wt% proteins, more preferably, 7% to 30 wt% proteins, based on the total weight of the fermented flour. Protein content can be determined by the Kjeldahl or Dumas method with a nitrogen factor of 6.25.

Advantageously, the fermented flour comprises 0.10% to 20 wt% fat, preferably, 0.50% to 15 wt% fat, more preferably, 1.0% to 10 wt% fat, based on the total weight of the fermented flour. Fat content can be determined by the Soxhlet extraction method.

Advantageously, the fermented flour comprises 20% to 80 wt% dietary fiber, preferably 25% to 75 wt% dietary fiber, more preferably 30% to 70 wt% dietary fiber, based on the total weight of the fermented flour. Dietary fiber content can be determined by the Prosky method, for example by following the Total Dietary Fibers AOAC 985.29 method.

Advantageously, the fermented flour comprises 1% to 60 wt% metabolizable carbohydrates, preferably 2% to 50 wt% metabolizable carbohydrates, more preferably 5% to 45 wt% metabolizable carbohydrates, based on the total weight of the fermented flour.

By "metabolizable carbohydrates", it is intended to mean the fraction of carbohydrates that can be digested by human enzymes. On the contrary, dietary fiber represents the fraction of carbohydrates that cannot be digested by human enzymes. Therefore, the metabolizable carbohydrate content is calculated as the total carbohydrate content minus the dietary fiber content. Total carbohydrate content is preferably determined by difference, i.e. by subtracting protein, lipid, ash, moisture and dietary fiber contents from 100. The ash content can be determined according to NF V 18-101 (combustion) and the moisture content can be determined by any heating method such as below 120°C.

Advantageously, the fermented flour is stored under appropriate conditions until use.

Advantageously, the fermented flour is stored at room temperature (about 21°C) under vacuum, or at about 4°C or at about -20°C, optionally under vacuum, preferably at about 4°C or at about -20°C, more preferably at about -20°C.

Advantageously, when the fermented flour is stored "under vacuum", it is stored at a pressure equal to or less than 1000 Pa, preferably equal to or less than 100 Pa, more preferably equal to or less than 30 Pa, even more preferably equal to or less than 5 Pa.

In the method for processing a raised dough according to the invention, the fungal fermented flour is added in an amount of 0.1 to 8 wt% by weight of flour.

Preferably, when the dough improver is provided in the form of a fungal fermented flour, the amount of dough improver is comprised between 0.5 wt% and 6 wt%, such as between 1 wt% and 5 wt% by weight of flour.

Preferably, in step a, forming a dough comprises mixing at least a raising agent, flour, water and a dough improver, said dough improver comprising fungal β-glucans, and laccase and/or peroxidase.

Advantageously, the raising agent is dissolved in lukewarm water, before being mixed with the other bread ingredients. When the raising agent is a yeast, this dissolution step allows to obtain a yeast broth. Alternatively, the raising agent can be added directly to the other ingredients of the dough.

As mentioned above, laccase and/or peroxidase, and fungal β-glucans can be provided separately or as a combined preparation to form the dough improver. Thus, laccase and/or peroxidase, and fungal β-glucans can be combined to form the dough improver before the forming step a). Alternatively, laccase and/or peroxidase, and fungal β-glucans can be admixed separately during the forming step a).

Preferably, the dough improver is suspended into water before use.

Preferably, step b, by "raising" the dough, it is intended to mean a period during which the dough rises.

In a first embodiment, in the method for processing a raised dough according to the invention, step b) of raising the dough is carried out in a single step.

Preferably, when raising the dough is carried out in a single step, the raising is carried out at a temperature comprised between 25°C and 55°C.

Preferably, the humidity is comprised between 10% and 70%.

Advantageously, the raising step is performed during a time comprised between 0 and 2 hours.

For example, when raising the dough is carried out in a single step, the raising can be carried out at a temperature comprised between 40°C and 50°C, a humidity comprised between 55% and 65% and for a time comprised between 40 minutes and 1 hour 30. In another example, the raising can be carried out at a temperature comprised between 25°C and 35°C, a humidity comprised between 45% and 55% and for a time comprised between 40 minutes and 1 hour 15.

In a second embodiment, in the method for processing a raised dough according to the invention, step b) of raising the dough is carried out in two single steps.

Preferably, when raising the dough is carried out in two steps, the two steps of raising are separated by a resting step.

Preferably, when raising the dough is carried out in two steps, the step of raising is carried out at a temperature comprised between 25°C and 45°C, more preferably at a temperature comprised between 30°C and 40°C.

Preferably, the humidity is comprised between 10% and 30%, more preferably between 15% and 25%.

Advantageously, the raising step is performed during a time comprised between 15 and 55 minutes, preferably between 20 and 50 minutes.

In one embodiment of this second embodiment, the two steps of raising are identical.

In another embodiment of this second embodiment, the two steps of raising are not identical.

Preferably, the resting step is carried out at room temperature (i.e. a temperature comprised between 20 and 25°C), for a time comprised between 10 and 20 minutes.

Advantageously, before the second step of raising and after the resting step, the dough is shaped. This shaping is usually performed by hand or using a tool, to give the dough a particular shape. Preferably, the dough is cut in equal pieces using a scale, and the pieces are sharpened in order to obtain the desired form. For example, the dough pieces can be sharpened to obtain the form of mini-baguettes, of a baguette, of a bun, of a boule, of a bread stick, of a loaf, of a roll, of mini-rolls, of a pita, of a naan, of a flatbread, of a flûte, or a ficelle or of a sarmentine.

Scarifying can be applied on the dough pieces, such as with a razorblade.

The present invention further relates to a method for preparing a cooked raised dough comprising the following steps:
i. processing a raised dough according to the method for processing a raised dough according to invention,
ii. cooking the raised dough.

The present invention also relates to a method for preparing a) cooked raised dough comprising the following steps:
i. processing a dough according to step a. of the method for processing a raised dough according to the invention, wherein step b. of raising the dough is performed during cooking.

Preferably, cooking is carried out in an oven.

Advantageously, the cooking is performed a temperature comprises between 160 and 240°C. Advantageously, the cooking time is comprised between 10 and 60 min. in one embodiment, the cooking is performed with a controlled humidity, comprised between 10 and 70%, preferably, 20 and 60%.

In another embodiment, the interior of the oven is sprayed with water at the beginning of the cooking process.

The present invention also relates to a raised dough comprising a raising agent, flour and water, laccase and/or peroxidase, and 2% by weight or less of fungal β-glucans, based on the weight of flour.

The raised dough, raising agent, flour, water, laccase, peroxidase and fungal β-glucans are as described above, including the preferred and advantageous embodiments.

Preferably, the raised dough according to the present invention comprises both laccase and peroxidase.

The raised dough according to the present invention can be either raw or cooked.

Finally, the present invention relates to the use of a dough improver comprising laccase and/or peroxidase and fungal β-glucans, for processing a raised dough comprising a raising agent, flour and water to increase its volume, wherein the fungal β-glucans of the dough improver are introduced in the dough at a content of 2% by weight or less based on the weight of flour.

The dough improver, laccase, peroxidase, fungal β-glucans, raised dough, raising agent, flour and water are as described above, including the preferred and advantageous embodiments.

The invention will be better understood in the light of the following examples, given by way of illustration.

### Example 1: Effect of fungal β-glucans and laccase or peroxidase supplementations on the dough volume.

### 1.1 Dough recipe for dough volume evaluation

Ingredients were mixed in order to contain 60 wt% of tap water, 1.8 wt% of salt (La Baleine^{®}) and 1.25 wt% of yeast (Saf-levure^{®}) with respect to the weight of wheat flour. Before being added to the other ingredients, the yeast is first dissolved in lukewarm tap water. When added to the composition, fungal β-glucans ("b-D-Glucan-from Piptoporus betulinus", ref YG165864, Carbosynth, 30.6 mg from a powder = 0.06 wt% / wt wheat flour), laccase ("Laccase from Trametes versicolor", ref 38429, Sigma-Aldrich, suspended in 57.5µl of water = 0.12 wt%/ wt wheat flour) and peroxidase ("Peroxidase from horseradish", ref 77332, Sigma-Aldrich, suspended in 6µl of water = 0.01 wt% / wt of wheat flour) weights were considered as unsignificant.

The ingredients of the dough were mixed to form 85 g dough pieces. These doughs were then kneaded briefly by a quick hand-mixing (1 minute (min)), and then flattened and put on the bottom of a graduated beaker. The beaker was covered by a wet tissue and put on an oven, at 48°C and 60% of humidity and water was sprayed inside the oven 5 times at the beginning of the incubation. After 0h (before incubation), 1h or 2h, the volume taken by the dough in the beaker was noted by a visual observation of the graduations.

### 1.2 Fungal β-glucan concentration

Fungal β-glucan concentration was determined by an enzymatic quantification of glucose after the glucan hydrolysis in the sample using the β-Glucan Assay Kit (Yeast & Mushroom) from Megazyme and following supplier's instructions. To this end, sodium acetate buffer at 200 mM (5.524 g/L of sodium acetate, Carl Roth, ref X891.1, and 1.961 g/L of acetic acid, Sigma-Aldrich, ref A6283) and adjusted at pH 4.5 (using HCl or NaOH), sodium acetate buffer at 1.2 M (33.144 g/L of sodium acetate, Carl Roth, ref X891.1), and 11.766 g/L of acetic acid (Sigma-Aldrich, ref A6283) and adjusted at pH 3.8 (using HCl or NaOH), NaOH at 8 M and at 1.7 M (Grosseron, ref 9920205) and sulfuric acid at 12 M (Sigma-Aldrich, ref 258105) were prepared.

### 1.3 Laccase and peroxidase activities

Laccase activity was determined by following the oxidation of 2,2'-azinobis(3-ethylbenzthiazoline-6-sulfonate) (ABTS) at 420 nm as previously described by Johannes and Majcherczyk, J. Biotechnol. 78 (2000) 193-199. To this end, the extraction was carried out in a sodium acetate buffer at 200 mM (5.524 g/L of sodium acetate, Carl Roth, ref X891.1, and 1.961 g/l of acetic acid, Sigma-Aldrich, ref A6283) and adjusted at pH 5 (using HCl or sodium hydroxyde (NaOH)) and the ABTS was prepared at 0.5 mM (Sigma-Aldrich, ref A1888-2G) in the same sodium acetate buffer. Optical density was monitored by a plate reader Infinite 200 PRO (Tecan).

Peroxidase activity was determined on the same principle as laccase activity determination but in presence of hydrogen peroxide, in conditions favoring peroxidase activity, and by subtracting residual laccase activity from the final result, *i.e.* at a higher pH and with a more adapted buffer (as described by Heinzkill et al., Applied Environmental Microbiology (1998) 64(5):1601-6). To this end, the extraction was carried out in a sodium phosphate buffer at 200 mM (9.246 g/L of sodium phosphate dibasic monohydrate from Carl Roth, ref T876.1, and 5.827G/I of sodium phosphate monohydrate, Carl Roth, ref T878.1) and adjusted at pH 7 using HCl or NaOH. The ABTS was prepared at 3.6 mM in the same sodium phosphate buffer and hydrogen peroxide was prepared at 0.5 mM (Sigma-Aldrich, ref 95321-100ML) in the same sodium phosphate buffer. Optical density was monitored by a plate reader Infinite 200 PRO (Tecan).

### 1.4 Results

The results are reported in tables 1 and 2 below.

The *"additive effect'* is calculated based on the sum of the effect of the supplementation by fungal β-glucans compared to the control and of the effect of supplementation by laccase or peroxidase compared to the control, and shows the value which would be expected in the absence of synergistic effect.

**Table 1: Effect of laccase and fungal β-glucans supplementations on the dough volume increasing during an incubation of 1h or 2h at 48°C.**

| | Laccase activity (in U/g of wheat flour) | Fungal β-glucans concentration (mg/g of wheat flour) | Volume increase after 1h incubation (% of volume compared to that of the control) |
|---|---|---|---|
| Condition | | | |
| Control (no supplementation) | 0 | 0 | 0 |
| Fungal β-glucans | 0 | 0.611 | + 9% |
| Laccase | 0.023 | 0 | + 4% |
| Fungal β-glucans + Laccase (measured synergistic effect) | 0.023 | 0.611 | + 23% |
| Fungal β-glucans + Laccase (calculated additive effect) | 0.023 | 0.611 | + 13% |

**Table 2: Effect of peroxidase and fungal β-glucans supplementations on the dough volume increase during an incubation of 2h at 48°C.**

| | Peroxidase activity (in U/g of wheat flour) | Fungal β-glucans concentration (mg/g of wheat flour) | Volume increase (% of increased volume compared to the control) after 2 h incubation |
|---|---|---|---|
| Condition | | | |
| Control (no supplementation) | 0 | 0 | 0 |
| Fungal β-glucans | 0 | 0.611 | + 2% |
| Peroxidase | 0.0006 | 0 | + 3% |
| Fungal β-glucans + Peroxidase (synergistic effect) | 0.0006 | 0.611 | + 8% |
| Fungal β-glucans + Peroxidase (calculated additive effect) | 0.0006 | 0.611 | + 5% |

The results show that fungal β-glucans and laccase or peroxidase act synergistically to improve by the volume of a bread dough compared to the same dough containing fungal β-glucans, or laccase, or peroxidase, or without supplementation. This synergistic effect is noticeable after an incubation of the dough at 48°C during 1h, for the combination of fungal β-glucans and laccase (see table 1). The synergistic effect is also noticeable after an incubation of the dough at 48°C during 2h for the combination of fungal β-glucans and peroxidase (see table 2).

### Example 2: Levels of peroxidase and laccase in fermented flours produced from fermentation of fruit and vegetable by-products.

### 2.1 Process for obtaining the fermented flours

The fermented flours were obtained by the following process:
a) providing a plant material (Citrus, Tuber, Cereal) having a moisture level between 45% and 95%, optionally mixed with a food grade nitrogen source such as ammonium sulphate, glutamic acid, yeast extract, peptone and/or di-ammonium phosphate,
b) sterilising the plant material of a), such as preferably, at about 100 kPa and about 121°C for about 20 min,
c) inoculating the sterile plant material with edible fungi (*Aspergillus* or *Pleurotus*),
d) incubating the inoculated plant material for a period of time to produce a fermented plant material, preferably at 18°C-40°C for a period of 5-50 days, more preferably, at 25°C-30°C for 14 to 35 days,
e) drying the fermented plant material of d), preferably at 30°C-70°C, and more preferably between 30°C-60°C; and
f) milling the dried, fermented plant material to form a fermented powder.

### 2.2 Laccase and peroxidase activities

Laccase and peroxidase activities are measured according to the methods described in paragraph 1.3.

### 2.3 Results

The average levels of peroxidase and laccase in citrus, rosaceae, tuber/roots, cereal and berry fermented flours are provided in Table 3.

| By-product used for fermentation | Peroxidase (U/g) * | Laccase (U/g) * | β-glucans (g/100g) |
|---|---|---|---|
| Citrus | 0.02 - 0.06 | 1.4 - 1.7 | 5 - 46 |
| Rosaceae | 0 - 0.003 | 1.4 - 3.4 | 7 - 26 |
| Tuber / Roots | 0.0001 - 2.38 | 0.9 - 6.1 | 4 - 29 |
| Cereal | 0.05 - 0.08 | 3.1 - 30.0 | 5 - 70 |
| Berry | 0 - 0.012 | 0.01 - 1.3 | 1 - 15 |

| | | | |
|---|---|---|---|
| * Enzymatic activities measured less than 2 weeks after the fermented flour preparation Table 3: Peroxidase and laccase activities (U/g) in some fermented flours prepared from fermentation of fruit and vegetable by-products. | | | |

### Example 3: Effect of fermented flours on the dough and bread volume.

### 3.1 Bread recipe for bread volume evaluation

In order to prepare a bread, 43.5 g of dry yeast (Saf-levure^{®}) are mixed with 2.6 L of lukewarm water (38°C) in a bottle of 10 L to obtain a yeast-broth having a concentration of 16.7 g/L of yeasts.

300 mL of yeast-broth are taken to proceed to the "frasage", by mixing it with wheat flour, non-iodized fin salt (La Baleine^{®}) and fermented flours. Citrus fermented flour or tuber fermented flour (in the present case, beet fermented flour) was added in supplement either at 0% (control), 1%, 2% or 5% in partial replacement of wheat flour (see Table 4 below).

**Table 4. Amounts of each ingredient.**

| Dough | Wheat flour (T65) in g | Fermented flour in g | Salt in g | Yeast-broth in mL | Water to add in ml |
|---|---|---|---|---|---|
| Control (x2) | 500 | 0 | 9 | 300 | 0 |
| Test 1 - Citrus fermented flour 1 wt% with respect to total flours | 495 | 5 | 9 | 300 | 0 |
| Test 2 - Citrus fermented flour 2 wt% with respect to total flours | 490 | 10 | 9 | 300 | 0 |
| Test 3 - Citrus fermented flour 5 wt% with respect to total flours | 475 | 25 | 9 | 300 | 80 |
| Test 4 - Tuber fermented flour 1 wt% with respect to total flours | 495 | 5 | 9 | 300 | 0 |
| Test 5 - Tuber fermented flour 2 wt% with respect to total flours | 490 | 10 | 9 | 300 | 0 |
| Test 6 - Tuber fermented flour 5 wt% with respect to total flours | 475 | 25 | 9 | 300 | 55 |

By "total flours", it is intended the total of non-fermented (*i.e*. wheat flour) and fermented flours.

When 5 wt% of a fermented flour was added to the total flours (wheat flour + fermented flour), the dough was too dry and did not have the expected rheological properties to allow the working of this dough and a good growth of the yeast. Thus, supplement of water was required (tests 3 and 6), which induced an increase of the water proportion to 76 wt% of tap water based the total flour for citrus fermented flour assay (test 3) and 71 wt% of tap water based on the total flours for tuber fermented flour assay. The dry yeast was first suspended in the tap water heated at 38°C, then mixed during 5 min and finally all the ingredients were handily mixed together in a bowl until the obtaining of a homogeneous dough.

The doughs were kneaded using the "kitchen-aid^{®}" food processor until the dough temperature is close to 25°C measured with a food thermometer, and the consistence is acceptable. Such a kneading lasted for approximately 8 min at about 200 RPM.

The doughs were then cut equally in pieces of 200g using a scale and sharpened in order to obtain the form of mini-baguettes (3 pieces at least by test). The length of the mini-baguettes has to be similar between each assay. Each piece was covered by a serviette until all the pieces were prepared.

Then, the mini-baguettes were put in an oven on fermentation mode fixed at 30°C and 50% humidity (air-o-steam, Electrolux). The rising was checked visually and was stopped after 50 min for food-processor kneaded doughs and 65 min for the others.

Scarifying was applied with a razorblade on all pieces in the same way.

The cooking was carried out in an oven (air-o-steam, Electrolux) set at 220°C, with the inside sprayed by water initially, during 13 minutes.

After cooling, the following parameters were measured:
- Weight with a weight scale;
- Length with a ruler;
- ¼ width with a ruler;
- ½ width with a ruler;
- ¼ height with a ruler;
- ½ height with a ruler;

The volume of each bread was calculated using these measurements and was also confirmed using the volume displacement method with rapeseeds detailed below.

### Volume displacement method:

1) Pour rapeseed into a measuring cup up to 1L,
2) Keep this amount of seeds,
3) Place the bread in the graduated container and pour the seeds,
4) Measure the volume displayed by the scale and deduce the volume of the bread by calculating the difference.

Specific volume was calculated by dividing the weight by the volume of each bread after cooling. The specific volume is a measure helping to compare breads with different initial weight or with different baking loss because of different recipes. It also gives indications about the density of the bread, the density being higher when the specific volume is lower.

### 3.2 Effect of citrus fermented flour dried at 35°C on breads

The results are reported in table 5 below.

**Table 5. Effect of citrus fermented flour dried at 35°C on breads for which the doughs were prepared with a food processor (8-min kneading). Letters (a, b) indicate significantly different values for a same column according to a t-test (p-value < 0.05).**

| | Enzymatic activity (in U/g of wheat flour) added by fermented flour | | Fungal β-glucans concentra tion (mg/g of wheat flour) | Final volume of breads after cooking (cm³) | Specific volume (cm³/g) 2 h after cooling | volume (cm³; displacem ent method with rapeseeds) |
|---|---|---|---|---|---|---|
| | Laccas e | Peroxida se | | | | |
| Control | 0 | 0 | 0 | 436 ^{a} | 2.50 ^{a} | 420 |
| Citrus fermented flour (1 wt% with respect to total flours) | 0.023 | 0.0006 | 0.611 | 487 ^{b} | 2.87 ^{b} | 500 |
| Citrus fermented flour (5 wt% with respect to total flours) | 0.12 | 0.003 | 3.055 | 502 ^{b} | 3.01 ^{b} | 500 |

The results show that adding of fermented flours containing laccase and peroxidase, and produced from fermented fruit or vegetable by-products, to a classic bread recipe significantly improves the volumes and specific volumes of breads. The improvement of bread volume and specific volume by flours prepared from the fermentation of fruit and vegetable by-products is observed for concentrations ranging from 1 % to 5% of fermented flour compared to wheat flour.

### 3.3 Effect of tuber fermented flour on breads

**Table 6. Effect of tuber fermented flour (mix of freeze-dried flour and flour dried at 35°C) on breads for which the doughs were kneaded by hand. Letters (a, b) indicate significantly different values for a same column according to a t-test (p-value < 0.05).**

| | Enzymatic activity (in U/g of wheat flour) added by fermented flour | | Fungal β-glucans concentration (mg/g of wheat flour) | Final volume of breads after cooking (cm³) | Specific volume (cm³/g) 2 h after cooling | volume (cm³; displacement method with rapeseeds) |
|---|---|---|---|---|---|---|
| | Laccase | Peroxidase | | | | |
| Control | 0 | 0 | 0 | 472 ^{a} | 2.75 ^{a} | 470 |
| Tuber fermented flour (1 wt% with respect to total flours) | 0.038 | 0.0012 | 0.894 | 495 ^{b} | 3.07 ^{b} | 500 |
| Tuber fermented flour (2 wt% with respect to total flours) | 0.076 | 0.0024 | 1.788 | 484 ^{b} | 3.00 ^{b} | 490 |
| Tuber fermented flour (5 wt% with respect to total flours) | 0.19 | 0.006 | 4.47 | 474 ^{a} | 2.95 ^{b} | 480 |

### 3.4 Effect of supplementations with citrus or tuber fermented flours on the dough volume increase during an incubation of 1h or 2h at 48°C.

The results are reported in table 7 below.

Table 7 shows an example with a flour prepared from a fermented citrus and with a flour prepared from a fermented tuber.

**Table 7. Effect of supplementations with citrus or tuber (beet) fermented flours on the dough volume increase during an incubation of 1h or 2h at 48°C.**

| | Enzymatic activity (in U/g of wheat flour) added by fermented flour | | Fungal β-glucans concentration (mg/g of wheat flour) | Volume increase of the doughs after 1 h of incubation (% of increased volume compared to the control) | |
|---|---|---|---|---|---|
| Condition | Laccase | Peroxidase | | | |
| Control (no supplementation) | 0 | 0 | 0 | 0 | 0 |
| Citrus fermented flour (1 wt% with respect to total flours) | 0.023 | 0.0006 | 0.611 | + 7% | + 6% |
| Tuber fermented flour (1 wt% with respect to total flours) | 0.038 | 0.0012 | 0.894 | + 12% | + 5% |

The results show that fermented flours comprising fungal β-glucans, laccase and peroxidase significantly improve the volume of a bread dough compared to the same dough with no supplementation.

### Example 4: Effect of fermented flours on the volume of muffins.

### 4.1 Muffin recipe for muffin volume evaluation

To make muffins, eggs and sugars were put in a Kenwood set to mix with the whisk for 30 seconds, at speed 6, twice. Then, all the other ingredients were added and mixed for 1.30 min at speed 1 to obtain a homogeneous dough. The dough was poured in muffin baking pans (120g per muffin) and cooked in a preheated oven at 160°C for 29 min.

The proportions of the ingredients are shown in Table 8 below.

**Table 8. Amount of ingredients for the muffin recipe.**

| | **Amounts of ingredients (in g)** | | |
|---|---|---|---|
| **Ingredients** | **Control Trial** | **Trial with Cereal fermented flour (high additive adding)** | **Trial with Cereal fermented flour (low additive adding)** |
| Wheat flour | 20.89 | 20.09 | 20.69 |
| Salt | 0.17 | 0.17 | 0.17 |
| Baking powder | 0.67 | 0.67 | 0.67 |
| Sugar | 12.98 | 12.98 | 12.98 |
| Glucose-fructose sirup | 6.64 | 6.64 | 6.64 |
| Sugar vanilliné | 1.26 | 1.26 | 1.26 |
| Eggs | 20.04 | 20.04 | 20.04 |
| Sunflower oil | 20.88 | 20.88 | 20.88 |
| Water | 5.96 | 5.96 | 5.96 |
| Mono and diglycerides of fatty acids | 0.15 | 0.15 | 0.15 |
| Chocolat chips | 10.00 | 10.00 | 10.00 |
| Wheat gluten | 0.15 | 0.15 | 0.15 |
| Xanthane gum | 0.20 | 0.20 | 0.20 |
| Cereal fermented flour | 0.00 | 0.80 | 0.20 |

### 4.2 Effect of supplementations with cereal fermented flours on the muffin volume increase during cooking.

The results are reported in table 9 below.

Table 9 shows an example with a muffin prepared with a flour prepared from fermented cereal.

**Table 9. Effect of supplementations with cereal fermented flour on the volume increase of a muffin after cooking.**

| | Enzymatic activity (in U/g of wheat flour) added by fermented flour | | Fungal β-glucans concentration in the final product (mg/g of wheat flour) | Volume after cooking (cm³ ; % of increased volume compared to the control) |
|---|---|---|---|---|
| Condition | Laccase | Peroxidase | | |
| Control (no supplementation) | 0 | 0 | 0 | 82.1 ; 0 % |
| Trial with cereal fermented flour (high additive adding = 3,82 wt% with respect to total flours) | 0.2 | 0.0024 | 2.98-7.02 | 86.6 ; +5.48 % |
| Trial with cereal fermented flour (low additive adding = 1 wt% with respect to total flours) | 0.05 | 0.0006 | 0.78-1.84 | 83.1 ; +1.22 % |

The results show that fermented flours significantly improve the volume of a muffin after cooking compared to the same muffin with no supplementation.

### Example 5: Effect of fermented flours on the volume of burger buns.

### 5.1 Burger bun recipe for burger bun volume evaluation

To make burger buns, dried yeast, sugar and lukewarm milk were stirred together in a beaker in order to obtain a sugared yeast broth, which was left to rest for 5 min. Cereal fermented flour was also mixed in water, and left to rest for 5 min before being added to the other ingredients. All the ingredients comprising the diluted cereal fermented flour, except the butter were put in a Kenwood bowl, and mixed together with the dough hook at speed 1. Then, the yeast broth was added and mixed to the other ingredients during 7 min at speed 1. Finally, butter was added little by little, still mixing at speed 1 for 3 min to obtain a homogeneous dough. The dough was covered with plastic paper and put in the oven for a first raise at 35°C for 25 min. The dough was cut in portions, shaped to obtain regular balls, put on the oven pierced plates covered with baking paper and finally put in the oven for the second raise at 35°C for 25 min. The raised dough was baked for 22 min in an oven preheated at 150°C, at 10% humidity, with a minimal ventilation.

The proportions of the ingredients are shown in Table 10 below.

**Table 10. Amount of ingredients for the burger buns recipe.**

| | **Amounts of ingredients (in g)** | |
|---|---|---|
| Ingredients | Control Trial | Trial with cereal fermented product |
| Wheat flour | 53,39 | 51,39 |
| Sugar | 3,09 | 3,09 |
| Salt | 0,83 | 0,83 |
| Butter | 4,54 | 4,54 |
| Lukewarm semiskimmed milk | 30,00 | 30,00 |
| Fresh yeast | 1,98 | 1,98 |
| Eggs | 6,17 | 6,17 |
| cereal fermented flour | 0,00 | 2,00 |

### 5.2 Effect of supplementations with cereal fermented flours on the volume increase of burger buns.

The results are reported in table 11 below.

**Table 11. Effect of supplementations with cereal fermented flour on the volume increase of a burger bun after cooking.**

| | Enzymatic activity (in U/g of wheat flour) added by fermented flour | | Fungal β-glucans concentration in the final product (mg/g of wheat flour) | Volume after cooking (cm³ ; % of increased volume compared to the control) |
|---|---|---|---|---|
| Condition | Laccase | Peroxidase | | |
| Control (no supplementation) | 0 | 0 | 0 | 524.5 ; 0 % |
| Trial with cereal fermented flour (3,75 wt% with respect to total flours) | 0.19 | 0.0026 | 2.056-6.9 | 557.7 ; +6.32 % |

Table 11 shows an example with a burger bun prepared with a flour obtained from fermented cereal.

The results show that fermented flour significantly improve the volume of a burger bun after cooking compared to the same burger bun with no supplementation.

### Example 6: Effect of fermented flours on the volume of pizza dough.

### 6.1 Pizza dough recipe for pizza dough volume evaluation

To make a pizza dough, wheat flour, salt and 50 mL of water were stirred together in a Kenwood bowl. In a beaker, a yeast broth was prepared from 50mL of lukewarm water warmed up to 38°C. Then, the dough was mixed with the Kenwood food processor at speed 1. Olive oil was added, the yeast broth. The dough was continuously and slowly mixed until the texture seems good (for about 6 minutes). The dough was covered with plastic paper and put in the oven for a first raise. This first raise lasts for 45 minutes at 35°C at 20% humidity, and then left for 15 minutes à room temperature (i.e. between 20 and 25°C). A second raise was then performed on the dough, that was cut in portions, shaped into regular balls and put on oven pierced plates with baking paper. This second raise lasts for 45 minutes at 35°C at 20% humidity, and then left for 15 minutes à room temperature. Finally, the pizza dough was baked in a preheated oven.
The proportions of the ingredients are shown in Table 12 below.

**Table 12. Amount of ingredients for the pizza dough recipe**

| | **Amounts of ingredients (in g)** | | | |
|---|---|---|---|---|
| **Ingredients** | **Control Trial** | **Trial with Tuber fermented flour** | **Trial with Citrus fermented flour** | **Trial with Cereal fermented flour** |
| Wheat flour (g) | 186.37 | 182.37 | 182.37 | 182.37 |
| Water (mL) | 100.00 | 100.00 | 100.00 | 100.00 |
| Salt (g) | 2.32 | 2.32 | 2.32 | 2.32 |
| Olive oil (mL) | 4.56 | 4.56 | 4.56 | 4.56 |
| Fresh yeast | 6.75 | 6.75 | 6.75 | 6.75 |
| Tuber fermented flour | 0.00 | 4.00 | 0.00 | 0.00 |
| Citrus fermented flour | 0.00 | 0.00 | 4.00 | 0.00 |
| Cereal fermented flour | 0.00 | 0.00 | 0.00 | 4.00 |

### 6.2 Effect of supplementations with a tuber, a citrus or a cereal fermented flour on the pizza dough volume increase after cooking.

The results are reported in Table 13 below.

**Table 13. Effect of supplementations with a tuber, a citrus or a cereal fermented flour on the volume increase of a pizza dough after cooking.**

| | Enzymatic activity (in U/g of wheat flour) added by fermented flour | | Fungal β-glucans concentration in the final product (mg/g of wheat flour) | Volume after cooking (cm³ ; % of increased volume compared to the control) |
|---|---|---|---|---|
| Condition | Laccase | Peroxidase | | |
| Control (no supplementation) | 0 | 0 | 0 | 755.7 ; 0 % |
| Trial with tuber fermented flour (2,15 wt% with respect to total flours) | 0.082 | 0.0026 | 1.92 | 795 ; +5.20 % |
| Trial with citrus fermented flour (2,15 wt% with respect to total flours) | 0.049 | 0.0013 | 1.31 | 778.1 ; +2.96 % |
| Trial with cereal fermented flour (2,15 wt% with respect to total flours) | 0.36-0.47 | 0.0036 | 1.68 - 3.96 | 796.3 ; +5.37 % |

Table 13 shows an example with a pizza dough prepared with a flour prepared either from fermented tuber, citrus or cereal.

The results show that fermented flours significantly improve the volume of a pizza dough after cooking compared to the same pizza dough with no supplementation.

## Claims

1. A method for processing a raised dough, comprising the following steps:
a. forming a dough by mixing at least a raising agent, flour, water and a dough improver, said dough improver comprising fungal β-glucans, and laccase and/or peroxidase;
b. raising the dough;
wherein the fungal β-glucans comprised in the dough improver are introduced at a content of 2 wt% or less by weight of the flour.

2. The method for processing a raised dough according to claim 1, wherein the raising agent is a yeast or sourdough.

3. The method for processing a raised dough according to claim 1 or claim 2, wherein the dough improver comprises laccase at a content comprised between 0,001 to 5 U/g of flour, and peroxidase at a content comprised between 0,000001 to 0,10 U/g of flour.

4. The method for processing a raised dough according to any of claims 1 to 3, wherein the dough improver is a fungal fermented flour.

5. The method for processing a raised dough according to claim 4, wherein the fungal fermented flour is added in an amount of 0.1 to 8 wt% by weight of flour.

6. The method for processing a raised dough according to any of the claims 1 to 5, wherein the dough improver is suspended into water before use.

7. The method for processing a raised dough according to claims 1 to 6, wherein step b) of raising the dough is carried out in a single step.

8. The method for processing a raised dough according to claims 1 to 6, wherein step b) of raising the dough is carried out in two single steps.

9. A method for preparing a cooked raised dough comprising the following steps:
i. processing a raised dough according to the method of any of claims 1 to 8,
ii. cooking the raised dough.

10. A method for preparing a cooked raised dough comprising the following steps:
i. processing a dough according to step a. of the method of any of claims 1 to 8, wherein step b. of raising the dough is performed during cooking.

11. A raised dough comprising:
- a raising agent, flour and water,
- laccase and/or peroxidase, and
- 2% by weight or less of fungal β-glucans, based on the weight of flour.

12. Use of a dough improver comprising laccase and/or peroxidase and fungal β-glucans, for processing a raised dough comprising a raising agent, flour and water to increase its volume, wherein the fungal β-glucans of the dough improver are introduced in the dough at a content of 2% by weight or less based on the weight of flour.
